# EUROPEAN PATENT SPECIFICATION

(11) **EP 2 347 661 B1**
(45) Date of publication and mention of the grant of the patent: **09.01.2019**
(21) Application number: 08878299.0
(22) Date of filing: 21.11.2008
(51) Int. Cl.: A23L 33/10, A23L 33/135, A23L 29/244, A23L 29/30, A23L 33/125, C12N 1/20, C12N 1/16, A23L 5/00

(54) **METHOD FOR OBTAINING A MIXTURE OF PROBIOTICS, NUTRIENT PREBIOTICS HAVING SYNERGISTIC SYMBIOTIC ACTION**
VERFAHREN ZUM HERSTELLEN EINER MISCHUNG VON PROBIOTIKA, NÄHRPRÄBIOTIKA MIT SYNERGISTISCH-SYMBIOTISCHER WIRKUNG
PROCÉDER D'OBTENTION D'UN MÉLANGE DE PROBIOTIQUES, DE PRÉBIOTIQUES NUTRIANTS POSSÉDANT UNE ACTION SYMBIOTIQUE SYNERGÉTIQUE

(43) Date of publication of application: 27.07.2011
(73) Proprietor: Cruz Serrano, José Antonio, Jalisco (MX)
(72) Inventor: Cruz Serrano, José Antonio, Jalisco (MX)
(74) Representative: Elzaburu S.L.P.
(86) International application number: PCT/MX2008/000159
(87) International publication number: WO 2010/059022

(56) References cited:
- EP-B1- 0 856 259
- WO-A1-2006/039768
- WO-A1-2007/125558
- WO-A1-2008/056983
- WO-A2-2007/079147
- WO-A2-2007/126990
- US-A1- 2006 141 097
- US-A1- 2007 009 502
- US-A1- 2007 104 700
- LESNIEWSKA VIOLETTA ET AL: "Effect on components of the intestinal microflora and plasma neuropeptide levels of feeding Lactobacillus delbrueckii, Bifidobacterium lactis, and inulin to adult and elderly rats", APPLIED AND ENVIRONMENTAL MICROBIOLOGY, AMERICAN SOCIETY FOR MICROBIOLOGY, US, vol. 72, no. 10, 1 October 2006 (2006-10-01), pages 6533-6538, XP002469592, ISSN: 0099-2240, DOI: 10.1128/AEM.00915-06
- 'Probio Forte' PAGE WEB SUPER SMART.COM., [Online] 10 February 2008, XP008146894 Retrieved from the Internet: <URL:http://www.super-smart.eu/article. pl?id=0494(=es&frimid=GG132&gclid=CLe...> [retrieved on 2009-06-10]

## Description

### Technical field

The present invention is in the technical field of biotechnology, as it provides a method for obtaining a mixture of probiotics, prebiotics and nutrients capable of remaining in biologically alive and active synergistic symbiosis.

Generating a means for transferring nutrients with a probiotic and prebiotic charge in symbiotic synergy that due to its novel features make it superior to those found in the state of the art.

### Object of the invention

The object of this invention is to produce a mixture that allows the symbiotic action between different strains of probiotics and prebiotics, ensuring that said probiotics and prebiotics are recognized by probiotics in order to benefit from them, thus achieving two conditions, the first one being to keep alive and active the probiotic strains and the second one being to achieve reproduction of said probiotic strains under biophysical and biochemical conditions of temperature, osmotic pressure and pH. This will result in a symbiosis that will achieve synergy in the presence of nutrients which may come from the three major functional groups, proteins, carbohydrates or lipids. The present biological mixture has symbiotic-synergistic features, and is able of being integrated in food, both raw and processed, and health care products such as creams and ointments. This allows optimum absorption of nutrients from human digestion or after topical contact with different parts of the skin. (Not restricting their effectiveness to veterinary applications, as well). It is important to clarify that the applications in food industry are not restricted to dairy-based foods.

### Background of the invention

Patent RU 2,229,251 discloses a method consisting of the preparation of the solution of a natural polymer selected from the group of gelatin, agar, pectin, by mixing said polymer with buffering water or milk; heating to a temperature between 40-90°C, the resulting mixture of the natural polymer solution being mixed with the cell biomass of at least one prebiotic strain that has accumulated metabolites in the form of prebiotic components in the culture process, while introducing additional prebiotic components and continuously mixing the solution; a resulting mixture is formed which derives from providing thereof to the container or vessel, the mixture is allowed to cool to obtain a thermotropic solidified composition in the form of a gel with a uniform distribution of the used components in the following ratios, WT%: 0.9-2.7 natural polymer, prebiotic biomass cells components 0.75-3.5 (dry weight); prebiotic components up to 4, water, aqueous buffer or milk to 100. The number of vital probiotic cells prepared in an immobilized way in the composition of 10⁸-10⁹ cfu's/g, the maximum tensile strength 1050-1500 Pa, the moisture content of 64-78% and the pH value is 3.7-6.2. Different types of flavors, additives and components can be applied, such as meat, fish, sausages, fruits and vegetables that can be introduced during food preparation, thus obtaining a functional food effect with probiotic properties and giving higher quality to food.

WO 2006/039768, WO 2008/056983, WO 2007/126990, US 2007/104700, WO 2007/079147, WO 2007/125558, US 2006/141097, US 2007/009502, EP 0 856 259 disclose each mixtures of probiotics with prebiotics as well as processes to manufacture said mixtures.

Currently existing technologies call synergy to the simple fact of the presence of a probiotic strain and a prebiotic in a substrate which may in fact be the food itself, when these technologies have the lyophilized probiotic, they keep beneficial bacteria alive but not active, this reduces the effectiveness of the colonization and beneficial effect as we must remember that probiotics are found throughout the digestive tract from mouth to anus, and lyophilized strains begin their re-activation when in contact with the moisture of saliva in the mouth, so sometimes the 4 hours it takes to reach the first third of the small intestine are not enough to be fully activated and be anchored in the mucosa that exists in the capillary villi of the small intestine, losing their metabolic function in the digestion of food.

The symbiosis that lead to live and active probiotics are currently preferably dairy products either yogurts or fermented milks, being lactic acid bacteria, the dairy medium is not the best way to sustainability as the pH is about 7 and in addition to this, dairy media with low viscosities present the problem of osmotic pressure on the bacteria, which causes them to die as a result plasmolysis or turgor, it is important to note that the membrane of probiotics is permeable and an isotonicity must be observed in the solution containing them and from which they manage to feed themselves.

All this coupled with the fact that once probiotics are inoculated even in the presence of prebiotics, it is possible that this mixture is inoculated in other food either primary or processed and to keep the bacteria alive and active, in order to achieve different formats in various foods and maintain the beneficial effect of the symbiosis.

Existing technologies do not achieve a synergistic symbiosis that works as a biological microprocessor able to generate responses to modulate physiological functions in the body, which would represent a truly functional food.

### Detailed description of the invention

The characteristic details of this method to obtain a mixture of probiotics and prebiotics with synergistic symbiotic action are clearly shown in the following disclosure.

The process disclosed below requires from its biological nature a highly sanitized environment, with pest control according to what the operational prerequisite 5 cites, insect and rat elimination control plan of ISO 22000 standard, applicable to the plan "Haccp" for food industry and air quality at least class 10,000 according to the food and pharmaceutical industry standards USP 797, ISO "designation 7". Environment with positive air pressure and recommended action of a continuous nebulization of formaldehyde in water to 37% in order to achieve a clean environment to avoid unwanted contamination of pathogenic bacteria. Also complete assurance of the safety of environment is envisaged, spraying fungicides which may be those commercially conventional to remove yeast and fungi, the combination of both is required. This condition must be maintained during the whole process described below.

It begins with the presence of lyophilized probiotic strains which have been stored at temperatures ranging from -10 to +17°C in a preferably not translucent and well sealed package to avoid any contamination.

These probiotic strains are:

| ***Lactobacillus*** | ***Bifidus*** | ***Streptococci*** | ***Yeasts*** |
|---|---|---|---|
| *L. casei* | *B. Breve* | *S. sanguis* | *D-* |
| *glucans* | | | |
| *B1,3*/*B1,6* | | | |
| *L. rhamsnosus* | *B. infantis* | *S. Bovis* | |
| *L. paracasei* | *B. bifidum* | *S Cremorisir* | |
| *L. rauteri* | *B. bacterium* | *S. Thermophilus* | |
| *L. lactis* | *B. Lactis* | *S. gallalytius* | |
| *L. Fermentum* | *B. animalis* | | |
| *L. gasseri* | *B. suis* | | |
| *L. jahnsonii* | *B. longum* | | |
| *L. acidopillus* | | | |
| *L. cripanus* | | | |
| *L. amylovorus* | | | |
| *L. delbrueckii* | | | |
| *L. bulgaricas* | | | |

The packaging containing said probiotics must be taken out from refrigeration, at least 20 minutes before the first manipulation, being suggested a preferential but not restrictive band of between 30 minutes to 3 hours, this period will allow the packaging and freeze-dried probiotic strains to be chilled-out and achieve a temperature that is within the range of 17 to 27°C.

Parallel to the conditioning of the probiotic strain, a prebiotic mixture is prepared:
This prebiotic mixture has a potable grade water base for humans, (free from pathogens) which is heated to a temperature that is in a range of 25 to 100°C, the more the water is hot, the better the ingredient solution to be mixed will be. Once hot water is added to the prebiotic (inulin), which essentially comprises fructans from chicory, agave, enula, yam, artichoke, asparagus, Jerusalem potato, yacon, leek, common garlic and dandelion.

It is noteworthy that for classification of inulin as a true probiotic it must meet three basic requirements.
1.- Selectivity, this refers to the fact that only provides probiotic bacteria and not the aerobic or pathogenic ones.
2.- That the chains be short enough so that by osmotic pressure and vibration, the probiotic can feed from them.
3.- No absorption at the intestinal villus by the host (human), the ratio is 1:1 to 1:0.1, ie for every liter of water add 1.0 kg. of prebiotic, or per liter of water add only 100 g of prebiotic. It must beat mechanically at a speed in the range of 10 to 150 rpm so that the prebiotic base does not generate caking or lumps and allows its integration with the water base to form a perfectly homogeneous liquid.

After reaching the first prebiotic mixture, it is heated to at least 20°C and not more than 100°C. Always avoid hydrolyzing inulin as the prebiotic properties may wane, because fructan chains could lose energy value in Kcal as food for probiotics. Then a simple carbohydrate is taken which by its high bioavailability is recommended to be glucose but could also be carbohydrates such as pallatinose, sugar or stevia.

Pour the simple carbohydrate in the prebiotic mixture and stir by mechanical action of not less than 10 rpm are integrated to form a new homogeneous aqueous mixture, the proportion of simple carbohydrates recommended here is the same as the prebiotic, ie 1:1 to 1:0.1 Prebiotic:Simple carbohydrate.

It is important to take care of solids, concentration in both mixtures, so the interaction of three factors must be assured:
1.- Temperature, directly proportional to solubility of the ingredients; the higher temperature higher solubility.
2.- Mechanical stirring action, directly proportional to increased agitation speed in revolutions per minute or beats per minute (linear or circular agitation) the greater the solubility will be.
3.- Adding prebiotic and simple carbohydrate, inversely proportional at a higher amount of these two elements in the water base or water plus prebiotic, the lower solubility. Mixtures of this technique can generate coefficients of water in a range of 10 to 99%, going from a semi-solid doughy mixture to a highly liquid one.

It is important to achieve a semisolid or perfectly homogeneous liquid mixture by balancing the elements and the above described process conditions.

The next element to be added are amines, which when integrated shall encourage the sustainability of living probiotics (Lactobacillus, Bifidus, Streptococcus and yeast) there are different probiotic strains that require different types of amines to promote their life, as a base it is recommended a vitamin mix that for every 1.0 kg consists of:

| No. | Ingredient | Quantity | Units |
|---|---|---|---|
| 1 | Vitamin E acetate | 78,000 | IU |
| 2 | Pyridoxine hydrochloride | 15.6 | g |
| 3 | Folic acid | 1.62 | g |
| 4 | Vitamin B-12 | 15.6 | mg |
| 5 | Ascorbic acid | 540.0 | g |

Optionally protein or even agars can be added to this vitamin mix, such as pectin, gelatin and agar-agar, which are added in proportions within the final mixture in the range of 0.3 to 7%, thus generating increased viscosity in the mixture allowing a regulating effect in terms of osmotic pressure in the bacteria thus preventing plasmolysis or turgor, the protein or agar plays a regulatory role in the amount of water in the solution to prevent membrane damage by osmotic pressure.

The mixture made up to this point has two conditions: amount of mixing and pH level. It requires an addition of no more than 5.0 g pre-vitamin mix per liter of total mix and its integration must be careful in what refers to alteration of pH, the pH optimum for probiotic sustainability has a range of 3.5 to 6.8, again depending on the strain, add the solid amine mixture and using a pH meter achieve the pH that the probiotic strain literature requires, then integrate it with stirring at least at 10 rpm or beats per minute, until reaching a perfectly homogeneous mixture.

This mixture that ends up being a "culture broth", is ready now, should ideally have a viscosity of 0.0100 poise with a range of 0.0500 to 0.0050 poise at 20°C.

This mixture, made under the sanitary conditions described in this technique, is lowly susceptible to contamination by pathogenic bacteria, but is optional in cases where these satisfactory health conditions are not available to pasteurize this "culture broth", prior to probiotic inoculation. Below is a table of suggested processes, but not restrictive for this optional step, depending on the safety of the working environment. Pasteurization prevents biological interference with unwanted organisms, this is due to the fact that from the competition for food that shall take place in the medium free from other microorganisms, the probiotics shall have no problem to feed thus promoting its viability, shelf life and reproducibility and fermentation.

### Pasteurization table for pathogenic bacteria.

| *Temperature* | *Time* | *Pasteurization Type* |
|---|---|---|
| 63°C (145°F) | 30 minutes | VAT Pasteurization |
| 72°C (161°F) | 15 seconds | Pasteurization (HTST) |
| 89°C (191°F) | 1.0 seconds | Ultra Pasteurization (UP) |
| 90°C (194°F) | 0.5 seconds | Ultra Pasteurization (UP) |
| 94°C (201°F) | 0.1 seconds | Ultra Pasteurization(UP) |
| 96°C (204°F) | 0.05 seconds | Ultra Pasteurization (UP) |
| 100°C (212°F) | 0.01 seconds | Ultra Pasteurization (UP) |
| 138°C (280°F) | 2.0 seconds | Sterilization (UHT) |

Probiotics come, usually in lyophilized powder concentrations, in commercial probiotics, which ranges from 0.5 to 4.0 billion 1x10¹¹ UCF's.

A perfectly clean container must be prepared. Water is heated from 15 to 60°C, preferably 37.5°C; said lyophilized powder and hot water are poured on the clean container in an metered and alternate way, making sure the addition is slow, as the de-freeze-drying is not immediate, the freeze-dried probiotics take a few seconds to absorb the added water, agglomerations should be avoided as much as possible, the recommended ratio here of probiotic freeze-dried powder and hot water is in the following range 1:1, 1:10, ie for each gram of lyophilized probiotic add one milliliter of hot water or up to each gram of lyophilized powder add ten milliliters of hot water, this depending on the desired concentration and solubility of the lyophilized powder in water.

The specific adequate action is to pour the freeze-dried probiotic powder into a bowl where said powder is spread as widely as possible and then with a syringe slowly injecting sprayed water on the freeze-dried probiotics leaving them to moist by absorbing the water that is slowly provided, hydration can be deadly for probiotics if not done in a controlled manner as described in this technique, because the permeable membrane as already mentioned obeys the physical forces of osmotic pressure whereby water enters and exits the membrane of the microorganism if tis technique is not observed and the ranges can fall in pressure ranges in both plasmolysis (negative pressure within the microorganism and implosion) or turgor and over-filling with water the probiotic and literally exploding it
*NOTE 1.* The cell membrane covering siad probiotics is usually highly sensitive to sharp mechanical action and osmotic pressure that the water provides in the mixture, so the microorganisms die if are violently shaken; avoid mechanical mixing.
*NOTE 2.* At more than 60°C probiotics usually die.
   If necessary, to achieve better integration of the probiotic mixture already in de-freeze-drying with water, pour it slowly and gently, from the mouth of a container to another for a few repetitions until leaving the mixture as integrated as possible, this is achieved at the point where there is no solid powder on or in the aqueous mixture of freeze-dried probiotics, then let the probiotic mixture stand by at least 5 minutes; this standing time ensures optimal absorption of the water provided and on the other hand leaves no time for the probiotics to require energy without any presence of carbohydrate to feed them.
*NOTE 3:* If the mixture of probiotics or freeze-dried probiotic powder is heated in the microwave, be careful with the temperatures reached, as the probiotics often not survive to the action of temperatures above 60°C this being a cause of the irregularity with which the temperature gradients move within a microwave oven and the possibility that certain areas, in an uncontrolled way, overheat above 60°C while the average temperature in the oven is below 50°C.

Heat the mixture (water, prebiotic, simple carbohydrate and amines), until reaching a temperature of 37.5°C.

Conditioning a non-translucent airtight, preferably plastic, container without metal being restrictive in food or surgery grade alloys in order to protect the photo sensitivity which is the sensitivity that probiotics have to the effect of light, which can affect their viability, recall that the ideal is total darkness which in fact is they way they live in the gastrointestinal tract of the host (human).

Keeping the temperature of the probiotic mixture in a range from 27 to 42°C, with preferred standard deviations of no more than 4°C.

To avoid the inconvenience of the mixture by sudden mechanical action and osmotic pressure, said mixture is poured into a container and poured into another container in a mouth to mouth fashion, repeating this procedure several times. The prebiotic and probiotic blend are then slowly poured in a translucent airtight container, remember that the membrane of probiotics is highly sensitive and sudden shakes destroy it, killing the probiotic.

If further integration by lump detection is required, pour the combination of prebiotic and probiotic blends from one container to another by just a few times slowly, at a distance (mouth to mouth of container preferably not mixing) not very high from one container to another in order to avoid a violent drop of the liquid mixture from one container to another.

Once this synergistic-symbiotic mixture is integrated, close the container that contains them and take it to a laboratory oven, allow to incubate for at least 24 h at 37.5 +/- 20%°C this should create conditions for the reproduction of probiotics, as the first fragmentation usually occurs between 24 and 48 hours, when pH and temperature conditions are suitable.

This is already a synergistic symbiotic biological mixture, but lacks the presence of a nutrient, as the spiked amines are for sustainability of probiotics, not for a human that consumptions or uses the finished product. Nutrients for human consumption that are added are: animal or plant proteins, with or without the presence of the nine essential amino acids, lipids preferably short-chain ones, omegas and also short-chain carbohydrates to release energy in simple metabolizations.

The functional action of the mixture (modulation of an organic function in the human body), is recommended at the following minimum concentrations:
Probiotics at least 1 x 10⁶ UCF's per gram of symbiotic synergistic blend
Prebiotics at least 2.0 grams per serving or application.

Nutrients within the international daily intake standards recommended for healthy human consumption.

Now that the functional action of the mixture will be effective under the following restrictions:
a.- In food, if the functional food is fried, the probiotics die.
b.- In food, if they are cooked at over 60 degrees Celsius the probiotics die.
c.- Since probiotics are live and active cold chain storage is necessary, between 5 and 14 degrees Celsius, when water percentages are high, over 50%, as the bacteria will begin an acid and enzyme segregation and reproduction cycle as they get close to 37 degrees Celsius. This will alter the color and flavor of food.

Some examples of probiotics and prebiotics mixture with synergistic symbiotic action applied on food are now disclosed.

### Example 1

### Method for obtaining symbiotic synergistic chocolate cake with antioxidants

1.- Preheat oven to 120°C.
2.- Spread butter generously to a mold, until a thin crust is formed.
3.- Sprinkle wheat flour in the mold with butter as a crust.
4.- Weigh the ingredients:
   A) 485 g of sugar with 260 g of inulin.
   B) 400 g of ground nut.
   C) 350 g of crushed graham crackers.
5.- Break into small pieces 420 g chocolate bars and put in a water bath at 50°C.
6.- Beat 450 grams of butter in a mold until they form "eyes" or "ribbons"
7.- Add inulin mixture which is composed of *agave wuebber tequilana azul,* sugar and stir until homogenized.
8.- Incorporate 15 egg yolks one at a time while beating.
9.- Beat the 15 egg whites until stiff.
10.- Add:
   350 g of crushed crackers.
   357 g of chocolate (85% of Total)
   360 g of nut (90% of Total)
   1 g of decaffeinated coffee
11.- Wrap the stiff egg whites
12.- Pour into mold
13.- Cook in the oven for 30 minutes
14.- Check for doneness with a knife that should come out dry
15.- Prepare covering
   Chocolate 63 g
   Nut 40 g
16.- Add 55 g of symbiotic synergistic mixture comprising:
   20 g inulin from *agave webbere tequilana azul*
   10 g of Nutricran 90 (90%, powdered cranberries as antioxidants)
   1 x 10¹² CFU's of probiotic blend with the following proportion:
      *Lactobacillus acidophilus* 40%,
      *Bifidus bacterium* 40%,
      Yeast D-glucans 20%
17.- Melt chocolate and mix the nuts to 35°C.
   In a metal container, beating by hand the molten chocolate with a wooden or metal paddle, in a metered way integrate the symbiotic synergistic blend by leaving it to slowly flow from the container that contains it to the container where the chocolate is located. As you pour the symbiotic synergistic blend add the melted chocolate whisking it manually to make a single mass.
18.- Keep the temperature at 30 +/- 2°C.
19.- Turn hot cake
20.- Cover the cake with chocolate, nuts and symbiotic synergistic mixture
21.- Cut the cake and pack in 50g portions

### Example 2

### Symbiotic synergistic gel with omega 3

Prepare the following solid mixtures:
1.- Prebiotic solid mixture

| | |
|---|---|
| Inulins | 101 g |

2.- Protein solid mixture

| | |
|---|---|
| Gelatin | 24 g |
| Xanthan gum | 2 g |

3.- Omega 3 solid mixture

| | |
|---|---|
| Omega 3 | 37.5 g |
| Citric acid | 2 g |
| Malic acid | 0.5 g |
| Vitamin supplement | 3.3 g |

Beat the mixtures with the indicated liquids at a temperature of 65°C.

| | |
|---|---|
| Syrup Kettle | |
| Water | 206.441 g |
| Prebiotic solid mixture | 101 g |
| Glucose | 121.334 g |

Add the syrup made in the previous step to the protein mixture.
Keep the temperature between 50 and 60°C in the mixer
Should start to thicken without being emulsified
Keep stirring for 10 minutes
Add the omega 3 solid mixture plus acids.

Keep stirring for other 5 minutes at no less than 45°C
If desired, add some flavor in a portion of 2 ml
Colorings can also be added as desired in a portion of 2 gr.

Once all the mixture is incorporated let stand for 5 minutes.

Take temperature ensuring a range between 38 to 42°C.

The semi-liquid mixture should be inoculated by slowly pouring the symbiotic synergistic mixture of 100 g Rhamnose Lactobacillus 40% and bifidus longum 60% with chicory inulin and vitamin B12, having a concentration of 1 x 10¹⁰ CFU's of probiotic combination, 25 g of chicory inulin and 25 g of Vitamin B12.

To join the symbiotic synergistic blend to the semi liquid gel pour into a third 1 liter container. At the same time mouth to mouth of the containers on one side the semi-liquid gel and on the other the symbiotic synergistic mixture, let incorporate without any stirring, to rest at least 10 min.

Proceed to packaging.

### Example 3

### Synergistic symbiotic green tea with

1.- Prepare the following list of ingredients:

| | |
|---|---|
| Purified Water | 800 L |
| High Fructose | 190 g |
| Citric acid | 3 g |
| Malic acid | 1 g |
| Green Tea Essence | 5 g |
| Menthol | 1 g |

2.- Heat the purified water to a temperature between 40 and 65°C.
3.- Add the high fructose to hot water by mechanical agitation from 50 to 300 rpm.
4.- Mix for a time of not less than 5 min in order to incorporate an homogeneous syrup. (Keeping the temperature in the mentioned range).
5.- Add an acid pre-mix consisting of citric and malic acids, keep the same speed as that used to make the syrup, while integrating the acids. (Secure a temperature between 37 to 40°C).
6.- Integrate the green tea essence keeping the revolutions of the above points for a period of 5 min. Finally at a speed of from 50 to only 80 rpm.
7.- Add the menthol, at the same temperature as above.
8.- A green tea is now integrated as a normal processed beverage.
9.- Take 100 ml of symbiotic synergistic mixture with a concentration as described

| | |
|---|---|
| *Bifidus lnfantis* | 1 x 10⁷ CFU's/g. |
| *Streptococcus termophillus* | 1 x 10⁶ CFU's/g. |
| Yacon inulin | 20 g in 100 ml. |
| Pallatinose (carbohydrate) | 10 g in 100 ml. |
| Prolibra (protein) | 12 g in 100 ml. |

10.- Integrate symbiotic synergistic blend to the traditional processed green tea drink, as follows:
1.- Heat green tea to a temperature of 37°C +/-2
2.- Take the symbiotic synergistic mixture at room temperature (20 to 26°C)
3.- Prepare a container with a capacity of not less than one and a half liter, take the two containers which have the traditional green tea and symbiotic synergistic mixture, place them face to face on the third container where both mixtures are to be poured, green tea and symbiotic synergistic mixture, slowly pour both into the container leaving both liquids to naturally blend.
4.- Once poured the entire contents of both, let stand for 30 minutes to ensure that the probiotics are integrated into the medium (do not mix mechanically), at room temperature, which is already defined. This will allow a pre-fermentation of tea and will give a nice touch of acidity to the flavor.

After 30 min standing, refrigerate during all the shelf life which in average shall be of no more than 15 days at temperatures between 6 and 8°C.

Based on all the above we can state the following benefits that the process for obtaining a mixture of probiotics, prebiotics and nutrients with symbiotic-synergistic action has.
1.- The symbiotic synergistic blend provides live and active probiotics.
2.- The taste of a food can be modulated from neutral to sweet.
3.- The probiotic strains can reproduce only by conditioning temperature as a biophysical parameter.
4.- The symbiotic synergistic mixture can be added to staple, processed foods or beverages watching the restrictions described above and following the recommendations of chilling the liquid bases.
5.- The viscosity of the symbiotic synergistic mixture can be adjusted.
6.- The symbiotic synergistic mixture can be frozen.
7.- The symbiotic synergistic mixture can withstand microwaves.

## Claims

1. A method for obtaining a mixture for preparing a functional food with symbiotic synergistic action comprising: at least one probiotic strain, a prebiotic solution and nutrients for human consumption which are added, **characterized in that** the probiotic strain is selected from the group of genera: *Lactobacillus, Bifidus, Streptococcus,* and Yeasts; and the prebiotic solution comprises natural inulin, amines and a simple carbohydrate., which comprises the following steps:
i) Remove the probiotic strain from refrigeration at least 20 minutes before the first manipulation
ii) Spreading said probiotic strain as widely as possible in a container
iii) Delyophilize said probiotic strain by spraying water over the probiotics
iv) Heat water in a container at a temperature of 37.5°C
v) Pour alternately on a clean container the wet probiotic strain and warm water at a ratio of 1:1 to 1:10
vi) Mix into the container the wet probiotic strain and hot water with the aid of a penshaped agitator until homogenize whereas in parallel to step (i):
vii) Heat water in a container to a temperature of between 25 to 100°C
viii) Add inulin to the hot water, keeping the following water-inulin ratio: 1:1 to 1:0.1
ix) Beat the water and inulin in a blender at a speed of between 10 to 150 rpm to prevent caking in the mix
x) Add a simple carbohydrate, in the following proportion Prebiotic-1:1 to 1:0.1 simple carbohydrate, which is selected for its high bioavailability
xi) Add 5.0 g of amines per liter of total mixture; when integrated, said amines promote the sustainability of live probiotics
xii) Pasteurize the prebiotic mixture (in case it does not comply with ISO 22000 standards applicable to the plan "Haccp" and USP 797, ISO "designation 7"), in a tubular pasteurizer to prevent pathogens and once the probiotic strain and the prebiotic are ready, proceeds to:
xiii) Mix said already conditioned probiotic strains with the prebiotic mixture
xiv) Store the mixture of probiotics and prebiotics by slowly pouring them into a non-translucent airtight container
xv) Add nutrients which are selected from animal or plant origin proteins, with or without the presence of the nine essential amino acids, lipids, preferably those short-chain ones, omegas and also short-chain carbohydrates to release energy in simple metabolizations
xvi) Incubate the mixture of probiotics and prebiotics by inserting it in a laboratory oven, allowing to incubate for at least 24 hours at 37.5 +/- 20% °C.

2. The method according to claim 1, wherein the pH of the mixture ranges between 3.5 and 6.8.

3. The method according to any one of the preceding claims, wherein the viscosity of the mixture ranges between 0.005 to 0.0005 Pa·s at 20 °C.

4. The method according to any one of the preceding claims, **characterized in that** the probiotic Lactobacillus is selected from the following group of species: *L. casei, L. rhamnosus, L. paracasei, L. rauteri, L. lactis, L. fermentum, L. gasseri, L. jahnsonii, L. acidopillus, L. cripanus, L. amylovorus, L. delbrueckii* and *L. bulgaricus* and said prebiotic solution.

5. The method according to any one of the preceding claims, **characterized in that** the probiotic Bifidus is selected from the group of: *B. breve, B. infantis, B. bifidum, B. bacterium, B. lactis, B. animalis, B. suis* and *B. longum.*

6. The method according to any one of the preceding claims, **characterized in that** the *Streptococcus* probiotic strains are: *S. sanguis, S. bovis, S. cremoris, S. thermophilus* and *S. gallalytius.*

7. The method according to any one of the preceding claims, **characterized in that** the probiotic yeast strain is D-glucans β1,3/β1,6.

8. The method according to any one of the preceding claims, **characterized in that** the inulin is obtained from: chicoria, agave, enula, yam, artichokes, asparagus, Jerusalem potato (*Solanum tuberosum*), yacon, leek, common garlic and *Taraxacum officinale.*

9. The method according to any one of the preceding claims, **characterized in that** the simple carbohydrates are: glucose, pallatinose (is glucose and fructose) and stevia.

10. The method according to any one of the preceding claims, **characterized in that** the amine is Vitamin E, Pyridoxine hydrochloride, folic acid, Vitamin B12 and ascorbic acid.

11. The method according to any one of the preceding claims, wherein said functional food is **characterized in that** it comprises the mixture obtainable by the process of claims 1-10 is a cake.

12. The method according to any one of the preceding claims, wherein said functional food is **characterized in that** it comprises the mixture obtainable by the process of claims 1-10 is a gel.

13. The method according to any one of the preceding claims, wherein said functional food is **characterized in that** it comprises the mixture obtainable by the process of claims 1-10 is a beverage.

## Patentansprüche

1. Eine Methode zum Erhalt eines Gemisches für die Zubereitung eines funktionalen Lebensmittels mit symbiotischer synergistischer Wirkung, das enthält: mindestens einen probiotischen Stamm, eine präbiotische Lösung und Nahrungsmittel für den menschlichen Verzehr, die zugegeben werden, dadurch ausgezeichnet, dass der probiotische Stamm aus der Gattungsgruppe *Lactobacillus, Bifidus, Streptococcus* und *Hefen* ausgewählt wird und dass die präbiotische Lösung Inulin, Amine und ein einfaches Kohlehydrat enthält; diese Methode umfasst die folgenden Schritte:
i) Den probiotischen Stamm spätestens 20 Minuten vor der ersten Bearbeitung aus der Kühlung entfernen
ii) Den besagten probiotischen Stamm so breit wie möglich in einem Behältnis ausbringen
iii) Den besagten gefriergetrockneten probiotischen Stamm durch das Versprühen von Wasser über die Probiotika rekonstituieren
iv) In einem Behältnis Wasser auf 37,5 °C erwärmen
v) Abwechselnd den nassen probiotischen Stamm und warmes Wasser im Verhältnis 1:1 bis 1:10 in ein sauberes Behältnis gießen
vi) Den nassen probiotischen Stamm und heißes Wasser mithilfe eines stiftförmigen Rührers in das Behältnis einmischen, bis zur Homogenisierung, währenddessen parallel zu Schritt (i):
vii) In einem Behältnis Wasser auf 25 bis 100 °C erhitzen
viii) Inulin in das heiße Wasser geben, dabei das folgende Wasser-Inulin-Verhältnis einhalten: 1:1 bis 1:0,1
ix) Wasser und Inulin in einem Mixer bei 10 bis 150 U/min schlagen, um Anbacken im Gemisch zu verhindern
x) Ein einfaches Kohlehydrat zugeben, das im folgenden Verhältnis Präbiotic-1:1 bis 1:0,1 aufgrund seiner hohen Bioverfügbarkeit ausgewählt wird
xi) 5,0 g Amine pro Liter Gesamtgemisch zugeben; die besagten Amine fördern die Nachhaltigkeit der lebenden Probiotika
xii) Die präbiotische Mischung pasteurisieren, (falls das Gemisch nicht der Norm ISO 22000, die für den Plan "Haccp" und USP 797, ISO "Bezeichnung 7" entspricht) in einem rohrförmigen Pasteurisiergerät, um Pathogene zu verhindern und nachdem der probiotische Stamm und das Präbiotikum fertig sind, folgendermaßen weitermachen:
xiii) Die besagten, bereits aufbereiteten probiotischen Stämme mit dem präbiotischen Gemisch vermischen.
xiv) Das Gemisch aus Probiotika und Präbiotika aufbewahren, indem sie langsam in ein lichtundurchlässiges, luftdichtes Behältnis gegossen werden
xv) Nährstoffe zugeben, die aus Proteinen tierischen oder pflanzlichen Ursprungs ausgewählt werden, mit oder ohne Anwesenheit der neun essenziellen Aminosäuren, Lipide, vorzugsweise kurzkettige, Omegas und ebenso kurzkettige Kohlehydrate, um Energie in einfachen Metabolisierungen freizusetzen
xvi) Das Gemisch aus Probiotika und Präbiotika durch Einführen in einen Laborofen für mindestens 24 Stunden bei 37,5 °C +/- 20 % inkubieren.

2. Die Methode gemäß Anspruch 1, worin der pH des Gemisches zwischen 3,5 und 6,8 liegt.

3. Die Methode gemäß einem der vorstehenden Ansprüche, worin die Viskosität des Gemisches zwischen 0,005 und 0,0005 Pas bei 20 °C liegt.

4. Die Methode gemäß einem der vorstehenden Ansprüche, die sich dadurch auszeichnet, dass der probiotische Lactobacillus aus der folgenden Gattungsgruppe ausgewählt wird: *L. casei, L. rhamnosus, L. paracasei, L. rauteri, L. lactis, L. fermentum, L. gasseri, L. jahnsonii, L. acidopillus, L. cripanus, L. amylovorus, L. delbrueckii* und *L*. *bulgaricus* und der genannten präbiotischen Lösung.

5. Die Methode gemäß einem der vorstehenden Ansprüche, die sich dadurch auszeichnet, dass der probiotische Bifidus aus einer folgenden Gattungsgruppe ausgewählt wird: *B. breve, B. infantis, B. bifidum, B. 25 bacterium, B. lactis, B. animalis, B. suis* und *B. longum.*

6. Die Methode gemäß einem der vorstehenden Ansprüche, die sich dadurch auszeichnet, dass die probiotischen Streptococcus-Stämme die folgenden sind: *S*. *sanguis, S. bovis, S. cremoris, S. thermophilus* und *S*. *gallalytius.*

7. Die Methode gemäß einem der vorstehenden Ansprüche, die sich dadurch auszeichnet, dass der probiotische Hefestamm D-glucans β1,3/β1,6 ist.

8. Die Methode gemäß einem der vorstehenden Ansprüche, die sich dadurch auszeichnet, dass das Inulin aus Chicoria, Agave, Enula, Yam, Artischocke, Spargel, Kartoffel *(Solanum tuberosum)*, Yacon, Porree, gemeiner Knoblauch und *Taraxacum officinale.*

9. Die Methode gemäß einem der vorstehenden Ansprüche, die sich dadurch auszeichnet, dass die einfachen Kohlehydrate Glukose, Palatinose (das ist Glukose und Fruktose) und Stevia sind.

10. Die Methode gemäß einem der vorstehenden Ansprüche, die sich dadurch auszeichnet, dass das Amin Vitamin E, Pyridoxin-Hydrochlorid, Folsäure, Vitamin B12 und Ascorbinsäure ist.

11. Die Methode gemäß einem der vorstehenden Ansprüche, in der das besagte funktionale Lebensmittel sich dadurch auszeichnet, dass das Gemisch, welches mithilfe des Prozesses laut Ansprüchen 1 bis 10 erhalten werden kann, ein Kuchen ist.

12. Die Methode gemäß einem der vorstehenden Ansprüche, in der das besagte funktionale Lebensmittel sich dadurch auszeichnet, dass das Gemisch, welches mithilfe des Prozesses laut Ansprüchen 1 bis 10 erhältlich ist, ein Gel ist.

13. Die Methode gemäß einem der vorstehenden Ansprüche, in der das besagte funktionale Lebensmittel sich dadurch auszeichnet, dass das Gemisch, welches mithilfe des Prozesses laut Ansprüchen 1 bis 10 erhalten werden kann, ein Getränk ist.

## Revendications

1. Un procédé pour obtenir un mélange pour préparer un aliment fonctionnel avec une action symbiotique synergique qui comprend: au moins une souche probiotique, une solution prébiotique et auquel sont ajoutés des nutriments destinés à la consommation humaine, **caractérisé en ce que** le probiotique est sélectionné parmi le groupe des genres : *Lactobacillus, Bifidus, Streptococcus* et levures ; et la solution prébiotique inclut de l'inuline naturelle, des amines et un glucide simple, qui comprend les étapes suivantes:
i) Retirer la souche probiotique de la réfrigération au moins 20 minutes avant la première manipulation
ii) Étendre ladite souche probiotique autant que possible dans un récipient
iii) Réhydrater cette souche probiotique lyophilisée en pulvérisant de l'eau sur les probiotiques
iv) Chauffer de l'eau dans un récipient à une température de 37,5 °C
v) Verser alternativement dans un récipient propre la souche probiotique humide et l'eau chaude à raison de 1:1 à 1:10
vi) Mélanger dans le récipient la souche probiotique humide et l'eau chaude à l'aide d'un agitateur en forme de crayon jusqu'à ce que le mélange devienne homogène Pendant ce temps, parallèlement à l'étape (i) :
vii) Chauffer de l'eau dans un récipient à une température de 25 à 100 °C
viii) Ajouter l'inuline à l'eau chaude, en maintenant le ratio eau-inuline de 1:1 à 1:0,1
ix) Battre l'eau et l'inuline dans un mixeur à une vitesse entre 10 et 150 rpm pour éviter que le mélange se compacte
x) Ajouter un glucide simple dans les proportions suivantes : prébiotique-1:1 à 1:0,1 glucide simple, lequel a été sélectionné en raison de sa grande biodisponibilité
xi) Ajouter 5,0 g d'amines par litre total de mélange. Une fois intégrées, lesdites amines favorisent la durabilité des probiotiques vivants
xii) Pasteuriser le mélange prébiotique (au cas où il ne satisferait pas aux normes ISO 22000 applicables au plan « HACCP » et USP 797, ISO « désignation 7 ») dans un pasteurisateur tubulaire pour éviter les agents pathogènes. Une fois que la souche probiotique et le prébiotique sont prêts, procéder à:
xiii) Mélanger lesdites souches probiotiques préalablement conditionnées avec le mélange prébiotique
xiv) Garder le mélange de probiotiques et de prébiotiques en les versant lentement dans un récipient hermétique non translucide
xv) Ajouter les nutriments sélectionnés parmi des protéines d'origine animale ou végétale, avec ou sans présence des neuf acides aminés essentiels, lipides, préférablement ceux à chaîne courte, omégas et aussi des glucides à chaine courte afin de libérer de l'énergie dans les métabolisations simples
xvi) Incuber la préparation de probiotiques et de prébiotiques en l'introduisant dans un four de laboratoire, le laissant incuber pendant au moins 24 heures à 37,5+/-20 % °C.

2. Le procédé selon la revendication 1 où le pH du mélange va de 3,5 à 6,8.

3. Le procédé selon l'une quelconque des revendications précédentes, où la viscosité de la préparation va de 0,005 à 0,0005 Pa.s à 20 °C.

4. Le procédé selon l'une quelconque des revendications précédentes, **caractérisé en ce que** le probiotique *Lactobacillus* est sélectionné parmi le groupe d'espèces suivant : *L. casei, L. rhamnosus, L. paracasei, L. rauteri, L. lactis, L. fermentum, L. gasseri, L. jahnsonii, L. acidopillus, L. cripanus, L. amylovorus, L. delbrueckii* et *L. bulgaricus* et ladite solution prébiotique.

5. Le procédé selon l'une quelconque des revendications précédentes, **caractérisé en ce que** le probiotique *Bifidus* est sélectionné parmi le groupe : B. *breve, B. infantis, B. bifidum, B. bacterium, B. lactis, B. animalis, B. suis* et *B*. *longum.*

6. Le procédé selon l'une quelconque des revendications précédentes, **caractérisé en ce que** les souches probiotiques *Streptococcus* sont : *S*. *sanguis, S. bovis, S. cremoris, S. thermophilus* et *S. gallatytius.*

7. Le procédé selon l'une quelconque des revendications précédentes, **caractérisé en ce que** la souche de levure probiotique est la D-glucanes β1,3/β1,6.

8. Le procédé selon l'une quelconque des revendications précédentes, **caractérisé en ce que** l'inuline est issue de : la chicorée, l'agave, l'aunée, la patate douce, l'artichaut, l'asperge, la pomme de terre (*Solanum tuberosum*), le yacon, le poireau, l'ail commun, et le *Taraxacum officinale.*

9. Le procédé selon l'une quelconque des revendications précédentes, **caractérisé en ce que** les glucides simples sont: le glucose, le palatinose (composé de glucose et fructose) et la stévia.

10. Le procédé selon l'une quelconque des revendications précédentes, **caractérisé en ce que** l'amine est la vitamine E, la pyridoxine hydrochloride, l'acide folique, la vitamine B12 et l'acide ascorbique.

11. Le procédé selon l'une quelconque des revendications précédentes où ledit aliment fonctionnel est **caractérisé en ce qu'**il contient le mélange obtenu à travers du procédé des revendications 1-10 est un gâteau.

12. Le procédé selon l'une quelconque des revendications précédentes où ledit aliment fonctionnel est **caractérisé en ce qu'**il contient le mélange obtenu à travers du procédé des revendications 1-10 est un gel.

13. Le procédé selon l'une quelconque des revendications précédentes où ledit aliment fonctionnel est **caractérisé en ce qu'**il contient le mélange obtenu à travers du procédé des revendications 1-10 est une boisson.
